(19) **Europäisches Patentamt / European Patent Office / Office européen des brevets**

(11) **EP 4 332 962 A1**

(12) # EUROPEAN PATENT APPLICATION
published in accordance with Art. 153(4) EPC

(43) Date of publication:
**06.03.2024  Bulletin 2024/10**

(21) Application number: **22810161.4**

(22) Date of filing: **24.03.2022**

(51) International Patent Classification (IPC):
**G10L 21/0208** (2013.01)

(52) Cooperative Patent Classification (CPC):
**G06F 18/00; G10L 21/0208**

(86) International application number:
**PCT/CN2022/082810**

(87) International publication number:
**WO 2022/247427 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.05.2021  CN 202110580896**

(71) Applicant: **ZTE Corporation**
**Shenzhen, Guangdong  518057 (CN)**

(72) Inventors:
• **LI, Jiali**
  **Shenzhen, Guangdong 518057 (CN)**
• **PENG, Ke**
  **Shenzhen, Guangdong 518057 (CN)**
• **CHEN, Huaming**
  **Shenzhen, Guangdong 518057 (CN)**
• **SUN, Yannan**
  **Shenzhen, Guangdong 518057 (CN)**
• **QIN, Chunhua**
  **Shenzhen, Guangdong 518057 (CN)**

(74) Representative: **Zoli, Filippo**
**Brunacci & Partners S.r.l.**
**Via Pietro Giardini, 625**
**41125 Modena (IT)**

(54) **SIGNAL FILTERING METHOD AND APPARATUS, STORAGE MEDIUM AND ELECTRONIC DEVICE**

(57)    A signal filtering method and apparatus, a storage medium and an electronic device. The method comprises: performing Fourier transform on time-domain data acquired by M microphones to convert the time-domain data into frequency-domain signals of M channels of a current frame (S202); separating the frequency-domain signals of the M channels to obtain a target signal and an interference signal of the current frame (S204); determining a signal-to-interference ratio of smoothed energy between the target signal and the interference signal (S206); determining a threshold of the current frame on the basis of the target signal and the interference signal (S208); and filtering the target signal by using the threshold of the current frame and the signal-to-interference ratio of the smoothed energy to obtain a pure target signal (S210).

FIG. 2

## Description

## CROSS-REFERENCE TO RELATED APPLICATION

This application is filed on the basis of Chinese patent application No. 202110580896.5 filed May 26, 2021, and claims priority to the Chinese patent application, the entire contents of which are incorporated herein by reference.

## TECHNICAL FIELD

Embodiments of the present disclosure relate to the field of communication, and more particularly, to a signal filtering method and apparatus, a storage medium, and an electronic device.

## BACKGROUND

Methods of interference suppression using a microphone array have been very mature, such as the simplest fixed beamforming, the commonly used delay-and-sum (DAS) beamforming in the time domain and fixed-coefficient beamforming in the frequency domain, and so on. A better interference suppression effect can be achieved by beamforming methods using an adaptive coefficient, including the commonly used Minimum Variance Distortionless Response (MVDR) beamforming and Generalized Sidelobe Cancellation (GSC) beamforming. However, to achieve a better effect, such methods all require many microphones. When the number of microphones is less than 4, the effect drops sharply. Considering the costs and power consumption of intelligent voice terminals and mobile communication devices, it is expected to reduce the number of microphones used. An Independent Component Algorithm (ICA) technique based on the improvement of conventional Blind Source Separation (BSS) has been developed in recent years, which allows for the use of two microphones to achieve a better interference suppression effect than beamforming. The ICA is essentially a technique that uses direction information to guide blind source separation and distinguish a target signal from an interference signal according to the direction of sound source. However, in practice, it is inevitable that some interference signals may be erroneously classified as target signals. Especially in long-distance sound pickup scenarios with reverberation, because the direction information is not clear, the separation and noise reduction effects of the ICA drop sharply. For consumer terminal products with high aesthetical requirements on the appearance and size, there is no room to increase the distance between two microphones, affecting the low-frequency separation and noise reduction effects of the ICA.

No effective solution has been proposed in existing technologies to resolve the problem of incomplete separation of interference residues from the target signal in some cases.

## SUMMARY

Embodiments of the present disclosure provide a signal filtering method and apparatus, a storage medium, and an electronic device.

According to an embodiment of the present disclosure, a signal filtering method is provided. The method includes: performing a Fourier transform on time-domain data acquired by M microphones to convert the time-domain data into frequency-domain signals of M channels of a current frame, where M is a natural number greater than 1; separating the frequency-domain signals of the M channels to obtain a target signal and an interference signal of the current frame; determining a signal-to-interference ratio between a smooth energy of the target signal and a smooth energy of the interference signal; determining a threshold for the current frame based on the target signal and the interference signal; and filtering the target signal based on the threshold for the current frame and the signal-to-interference ratio between the smooth energies to obtain a pure target signal.

According to another embodiment of the present disclosure, a signal filtering apparatus is provided. The apparatus includes: a first conversion module, configured for performing a Fourier transform on time-domain data acquired by M microphones to convert the time-domain data into frequency-domain signals of M channels of a current frame, where M is a natural number greater than 1; a first separation module, configured for separating the frequency-domain signals of the M channels to obtain a target signal and an interference signal of the current frame; a first determining module, configured for determining a signal-to-interference ratio between a smooth energy of the target signal and a smooth energy of the interference signal; a second determining module, configured for determining a threshold for the current frame based on the target signal and the interference signal; and a first filtering module, configured for filtering the target signal based on the threshold for the current frame and the signal-to-interference ratio between the smooth energies to obtain a pure target signal.

According to still another embodiment of the present disclosure, a computer-readable storage medium is further provided, storing a computer program which, when executed by a processor, causes the processor to carry out the method described in any one of the above method embodiments.

According to yet another embodiment of the present disclosure, an electronic device is further provided, including a memory and a processor, where the memory is configured for storing a computer program which, when executed by a processor, causes the processor to carry out the method described in any one of the above method embodiments.

## BRIEF DESCRIPTION OF DRAWINGS

FIG. 1 is a structural block diagram of hardware of a mobile terminal using a signal filtering method according to an embodiment of the present disclosure;

FIG. 2 is a flowchart of a signal filtering method according to an embodiment of the present disclosure;

FIG. 3 is an overall structural block diagram according to an embodiment of the present disclosure;

FIG. 4 is an overall flowchart according to an embodiment of the present disclosure;

FIG. 5 is a flowchart (one) of a control policy according to an embodiment of the present disclosure;

FIG. 6 is a flowchart (two) of a control policy according to an embodiment of the present disclosure; and

FIG. 7 is a structural block diagram of a signal filtering apparatus according to an embodiment of the present disclosure.

## DETAILED DESCRIPTION

Embodiments of the present disclosure will be described in detail below in conjunction with the drawings and the embodiments.

It should be noted that in the description, claims, and accompanying drawings of the embodiments of the present disclosure, the terms "first", "second" or the like are used to are used to distinguish similar objects, and are not necessarily used to describe a specific sequence or a precedence order.

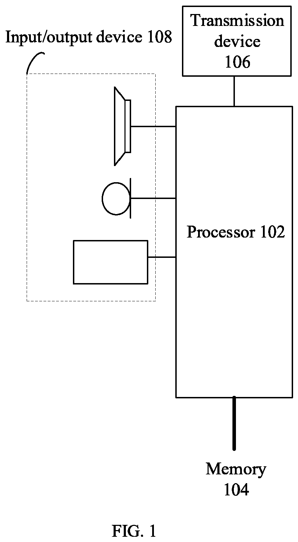

Method embodiments provided in the embodiments of the present disclosure may be executed in a mobile terminal, a computer terminal, or similar computing devices. Execution on a mobile terminal is described as an example. FIG. 1 is a structural block diagram of hardware of a mobile terminal using a signal filtering method according to an embodiment of the present disclosure. As shown in FIG. 1, the mobile terminal may include one or more (only one shown in FIG. 1) processors 102 (where the processor 102 may include, but not limited to, a processing device such as a microprocessor (e.g., a Microcontroller Unit (MCU)) or a programmable logic device (e.g., a Field Programmable Gate Array (FPGA))) and a memory 104 configured for storing data. The mobile terminal may further include a transmission device 106 and an input/output device 108 to provide a communication function. It can be understood by those having ordinary skills in the art that the structure shown in FIG. 1 is merely an example and does not limit the structure of the mobile terminal. For example, the mobile terminal may also include more or fewer components than those shown in FIG. 1, or have a different configuration than shown in FIG. 1.

The memory 104 may be configured for storing a computer program, for example, software programs and modules of application software, e.g., a computer program corresponding to a signal filtering method according to an embodiment of the present disclosure. The computer program stored in the memory 104, when executed by the processor 102, causes the processor 102 to implement various functional applications and data processing, i.e., implement the method described above. The memory 104 may include a high-speed random access memory, and may also include a nonvolatile memory, e.g., one or more magnetic storage devices, flash memories, or other nonvolatile solid-state storage devices. In some examples, the memory 104 may include memories located remotely from the processor 102, and the remote memories may be connected to the mobile terminal via a network. Examples of the network include, but not limited to, the Internet, an intranet, a local area network, a mobile communication network, and combinations thereof.

The transmission device 106 is configured for receiving or sending data via a network. Examples of the network may include a wireless network provided by a communication provider of the mobile terminal. In an example, the transmission device 106 includes a Network Interface Controller (NIC), which may be connected to another network device via a base station to communicate with the Internet. In an example, the transmission device 106 may be a Radio Frequency (RF) module, which is configured for communicating with the Internet in a wireless manner.

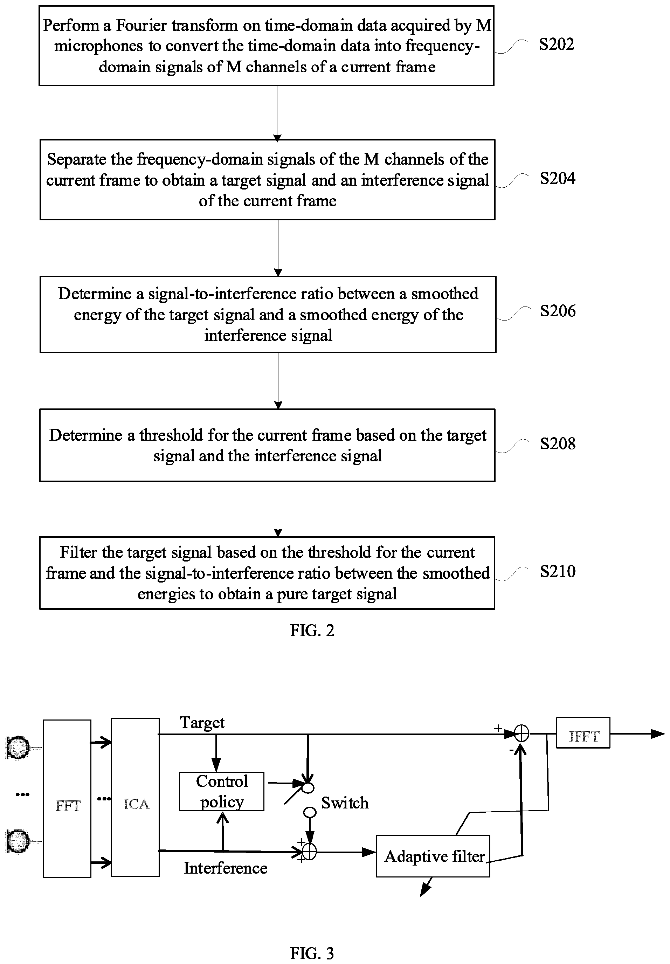

In an embodiment, a signal filtering method is provided. FIG. 2 is a flowchart of a signal filtering method according to an embodiment of the present disclosure. As shown in FIG. 2, the method includes the following steps.

In a step of S202, a Fourier transform is performed on time-domain data acquired by M microphones to convert the time-domain data into frequency-domain signals of M channels of a current frame, where M is a natural number greater than 1.

In a step of S204, the frequency-domain signals of the M channels are separated to obtain a target signal and an interference signal of the current frame.

In a step of S206, a signal-to-interference ratio between a smooth energy of the target signal and a smooth energy of the interference signal is determined.

In a step of S208, a threshold for the current frame is determined based on the target signal and the interference signal.

In a step of S210, the target signal is filtered based on the threshold for the current frame and the signal-to-interference ratio between the smooth energies to obtain a pure target signal.

An entity executing the above steps may be a device including an ICA, which is connected to an adaptive filter, i.e., an adaptive filter is cascaded after the ICA device, but the present disclosure is not limited thereto.

In this embodiment, after the frequency-domain signals of the M channels are separated to obtain the target signal and the interference signal of the current frame, the target signal and the interference signal may be divided into S sub-bands, where S is a natural number greater than 1, and the steps S206 to S210 are repeated for each sub-band.

Through the above steps of separating the frequency-domain signals of the M channels of the current frame to obtain a target signal and an interference signal of the current frame, determining a signal-to-interference ratio between a smooth energy of the target signal and a smooth energy of the interference signal, determining a threshold for the current frame based on the target signal and the interference signal, and filtering the target signal based on the threshold for the current frame and the signal-to-interference ratio between the smooth energies to obtain a pure target signal, an input source of the adaptive filter is controlled based on the target signal and the interference signal, thereby improving the accuracy of the adaptive filter in interference prediction. Therefore, the problem of incomplete separation of interference residues from the target signal in existing technologies can be resolved, thereby effectively suppressing the interference signal.

In an embodiment, determining a signal-to-interference ratio between a smooth energy of the target signal and a smooth energy of the interference signal includes:

S1: calculating an energy $E_s(l)$ of the target signal in an effective frequency band;

S2: calculating the smooth energy $\overline{E}_s(l) = (1- \alpha)\overline{E}_s(l-1) + \alpha E_s(l)$ of the target signal, where $a$ represents a first smoothing coefficient, and $\alpha$ is greater than 0 and less than 1;

S3: calculating an energy $E_i(l)$ of the interference signal in the effective frequency band;

S4: calculating the smooth energy $\overline{E}_i(l) = (1- \alpha)E_i(l-1) + \alpha E_i(l)$ of the interference signal; and

S5: calculating the signal-to-interference ratio $\overline{R}_0 = \overline{E}_s(l)/\overline{E}_i(l)$ between the smooth energies.

In an embodiment, determining a threshold for the current frame based on the target signal and the interference signal includes:

S1: calculating an energy $E_s(l)$ of the target signal in an effective frequency band;

S2: calculating an energy $E_i(l)$ of the interference signal in the effective frequency band;

S3: calculating a signal-to-interference ratio $R(l) =$ $E_s(l)/E_i(l)$ of the current frame;

S4: calculating a smooth signal-to-interference ratio $\overline{R}(l)=(1-\beta)\overline{R}(l-1)+\beta R(l)$ and a mean value $\overline{R}_{mean}(l)$ of the smooth signal-to-interference ratio $\overline{R}(l)$ in a preset time period, where $\beta$ represents a second smoothing coefficient, and $\beta$ is greater than 0 and less than 1; and

S5: determining the threshold for the current frame according to $\overline{R}_{mean}(l)$.

In an embodiment, filtering the target signal based on the threshold for the current frame and the signal-to-interference ratio between the smooth energies to obtain a pure target signal includes:

S1: setting an input signal of an adaptive filter as $Z(k,l) = Y^2(k,l)$ when the signal-to-interference ratio between the smooth energies is greater than the threshold for the current frame, where $Y^2(k,l)$ represents the interference signal; and

S2: filtering the target signal based on the input signal of the adaptive filter to obtain the pure target signal $\hat{S}(k,l) = Y^1(k,l) - W^*(k, l)Z(k,l)$, where $Y^1(k,l)$ represents the target signal, $W(k,l)$ represents a coefficient of the adaptive filter, and (■)*represents conjugation.

In an embodiment, filtering the target signal based on the threshold for the current frame and the signal-to-interference ratio between the smooth energies to obtain a pure target signal includes:

S1: setting an input signal of the adaptive filter as $Z(k,l) = Y^1(k,l) + Y^2(k,l)$ when the signal-to-interference ratio between the smooth energies is less than or equal to the threshold for the current frame, where $Y^1(k,l)$ represents the target signal, and $Y^2(k,l)$ represents the interference signal; and
S2: filtering the target signal based on the input signal of the adaptive filter to obtain the pure target signal $\hat{S}(k,l)=Y^1(k,l) - W^*(k,l)Z(k,l)$, where $Y^1(k,l)$ represents the target signal, $W(k,l)$ represents a coefficient of the adaptive filter, and (■)* represents conjugation.

In an embodiment, after filtering the target signal based on the threshold for the current frame and the signal-to-interference ratio between the smooth energies to obtain a pure target signal, the method further includes:

S1: performing an inverse Fourier transform on the pure target signal to obtain a time-domain target signal; and
S2: outputting the time-domain target signal.

In this embodiment, N sampling points of each microphone may be formed into one frame, which is converted into frequency-domain signals of M channels by a Fast Fourier Transform (FFT), where each channel has N frequencies. The inverse Fourier transform in this embodiment is an inverse transform of the fast Fourier transform.

In an embodiment, after filtering the target signal based on the threshold for the current frame and the signal-to-interference ratio between the smooth energies to obtain a pure target signal, the method further includes: S1: feeding back the pure target signal into the adaptive filter to update a filtering coefficient of the adaptive filter.

The present disclosure will be described below in conjunction with embodiments.

This embodiment provides an interference suppression method for a microphone array, to improve the problem of incomplete separation of interference by the conventional ICA technique, increase the signal-to-noise ratio of the target signal after ICA-based separation, thereby improving the wake-up rate and recognition rate of an intelligent voice device, and improving the voice call experience in a strong interference scenario.

As shown in FIG. 3, in this embodiment, an adaptive filter is cascaded after the ICA to predict interference, and then cancel the interference with the target signal containing interference residues. In an implementation, characteristics of the target signal and the interference signal separated by the ICA are analyzed to control the input source of the adaptive filter. Depending on different decision results, the input of the adaptive filter is from the interference signal or from a superposition of the target signal and the interference signal. In this way, the accuracy of the adaptive filter in interference prediction is improved, and an effect of suppressing interference residues in the target signal separated by the ICA is achieved. Including followings.

Time-domain data acquired by M (M>1) microphones, with N sampling points of each microphone being formed into one frame, is converted into frequency-domain signals of M channels by a Fast Fourier Transform (FFT), where each channel has N frequencies.

The frequency-domain signals of the M channels of a current frame, with N frequencies in each channel, are used as an input of an ICA module.

According to the frequency-domain signals of the M channels, the ICA module locates a sound source of a target signal to obtain an angle of the target sound source.

According to the angle of the target sound source, the ICA module separates two channels of data, namely the target signal and an interference signal, from the frequency-domain signals of the M channels.

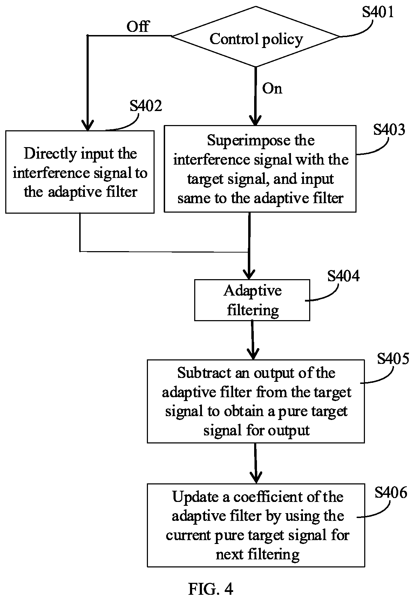

As shown in FIG. 4, the following steps are included.

In a step of S401, the target signal and the interference signal separated by the ICA are used as an input of a control policy at the same time, and the control policy outputs two decisions, i.e., "switch off" and "switch on", according to characteristics of the target signal and the interference signal.

In a step of S402, the interference signal is directly input to the adaptive filter for filtering.

In steps of S403 to S404, when the switch is switched on, the interference signal of the current frame is first superimposed with the target signal of the current frame, and then input to the adaptive filter for filtering to output an interference prediction signal.

In a step of S405, the interference prediction signal output by the adaptive filter is subtracted from the target signal of the current frame to obtain a pure target signal, and the pure target signal is converted from the frequency domain back to the time domain (i.e., by IFFT) to obtain a final output of noise reduction processing.

In a step of S406, the pure target signal is fed back to the adaptive filter at the same time, such that the adaptive filter iteratively updates its coefficient to prepare for filtering of a next frame.

When the number M of microphones equals to 2, time-domain data acquired by the two microphones are respectively $x_1(n)$ and $x_2(n)$. A Fourier transform is performed on the two channels of time-domain data to obtain two channels of frequency-domain signals $X_1(k,l)$ and $X_2(k,l)$, where $(k,l)$ represents data of a $k^{th}$ frequency of an $l^{th}$ frame, and k=0, ..., N-1. Then, a cross-power spectrum is calculated as

$$S_{x_1 x_2}(k,l) = E\{X_1(k,l)X_2^*(k,l)\}$$

, and an inverse Fourier transform is performed on the cross-power spectrum $S_{x_1 x_2}(k,l)$ to obtain a cross-correlation function. A delay corresponding to a maximum value of the cross-correlation function is a delay $\tau_{12}$ from the sound source to the two microphones, with a mathematical expression as shown below:

$$\tau_{12} = \underset{\tau}{\mathrm{argmax}} \sum_{k=0}^{N-1} S_{x_1 x_2}(k,l) \mathrm{e}^{j\frac{2\pi k\tau}{N}}.$$

According to a trigonometric function, a corresponding target angle $\theta = \cos^{-1}(\tau_{12}c/D)$ is obtained, where c represents a sound velocity of 340 m/s, D represents a distance between the two microphones, and an axis direction corresponds to 0 degrees.

A target steering vector is calculated according to the target angle as:

$$\mathbf{h}^1(k) = \begin{bmatrix} 1 & \mathrm{e}^{-j2\pi f_k D\cos\theta/c} \end{bmatrix}^{\mathrm{T}},$$

where $f_k$ represents a $k^{th}$ frequency, and [■]T represents matrix transposition.

$$W^p(k) = [\mathbf{h}^1(k) \mid I^{2,\dots,M}]^{-1} \quad (M=2),$$

where $I^{2,\dots,M}$ represents a unit matrix of M-1 columns, and $[\blacksquare]$-1 represents matrix inversion.

ICA-based separation of the acquired and inputted two channels of frequency-domain signals $X(k,l)$ = $[X_1(k,l),X_2(k,l)]^T$ is performed according to $W^p(k)$ generated based on the target steering vector:
estimating a multi-channel image $\mathbf{Y}^m(k, l), m$ = 1,2 of the sound source; and taking a first element of $\mathbf{Y}^1(k,l)$ and a first element of $\mathbf{Y}^2(k,l)$ as the target signal $Y^1(k,l)$ and the interference signal $Y^2(k,l)$ output by the ICA-based separation, respectively.

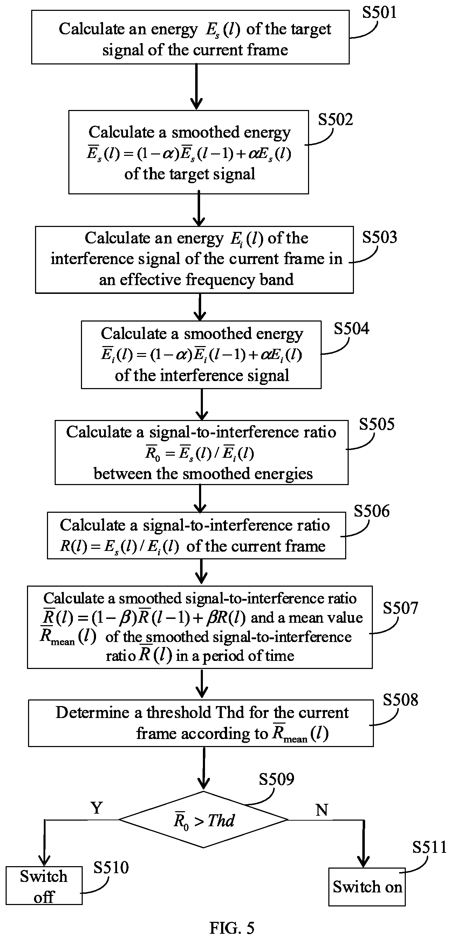

In an implementation (one) of the control policy based on the output of the ICA, as shown in FIG. 5, the following steps are included.

In a step of S501, an energy $E_s(l)$ of the target signal $Y^1(k,l)$ of the current frame in an effective frequency band is calculated.

In a step of S502, a smooth energy $\overline{E}_s(l)$=(1-$\alpha)\overline{E}_s(l$-1) + $\alpha E_s(l)$ of the target signal is calculated, where a represents a smoothing factor (0<$\alpha$<1).

In a step of S503, an energy $E_i(l)$ of the interference signal $Y^2(k,l)$ of the current frame in the effective frequency band is calculated.

In a step of S504, a smooth energy $\overline{E}_i(l)$=(1-$\alpha)\overline{E}_i(l$-1)+$\alpha E_i(l)$ of the interference signal is calculated.

In a step of S505, a signal-to-interference ratio $\overline{R}_0 = \overline{E}_s(l)/ \overline{E}_i(l)$ between the smooth energies is calculated.

In a step of S506, a signal-to-interference ratio $R(l) = E_s(l)/E_i(l)$ of the current frame is calculated.

In a step of S507, a smooth signal-to-interference ratio $\overline{R}(l)$= (1- $\beta)\overline{R}(l$-1)+$\beta R(l)$ and a mean value $\overline{R}_{mean}(l)$ of the smooth signal-to-interference ratio $\overline{R}(l)$ in a period of time (e.g., 2s) are calculated, where $\beta$ represents a smoothing factor (0<$\beta$<1).

In a step of S508, a threshold Thd for the current frame is determined by table look-up or threshold comparison according to $\overline{R}_{mean}(l)$.

In a step of S509, if $\overline{R}_0$ > *Thd*, a decision of "switch off" is output; otherwise, a decision of "switch on" is output.

In a step of S510, if the decision is "switch off", an input signal of the adaptive filter is set as $Z(k,l)$ = $Y^2(k,l)$.

In a step of S511, if the decision is "switch on", the input signal of the adaptive filter is set as $Z(k,l)=Y^1(k,l)+Y^2(k,l)$.

Adaptive filtering is performed to obtain an estimated pure target signal:

$$\hat{S}(k,l) = Y^1(k,l) - W^*(k,l)Z(k,l),$$

where $W(k,l)$ represents an adaptive filtering coefficient, and $(\blacksquare)^*$ represents conjugation.

An inverse Fourier transform is performed on $\hat{S}(k,l)$ to obtain a final time-domain output of noise reduction processing.

The adaptive filtering coefficient is adaptively updated as:

$$W(k,l+1) = W(k,l) + \mu \frac{\hat{S}(k,l)}{E_z(k,l)} Z^*(k,l),$$

where $\mu$ represents an update step size, and $E_z(k,l)$ represents a smooth energy of $Z(k,l)$

$E_z(k,l)$ = (1-$\lambda)E_z(k,l$-1)+$\lambda|Z(k,l)|^2$, where $\lambda$ represents a smoothing factor (0<$\lambda$<1).

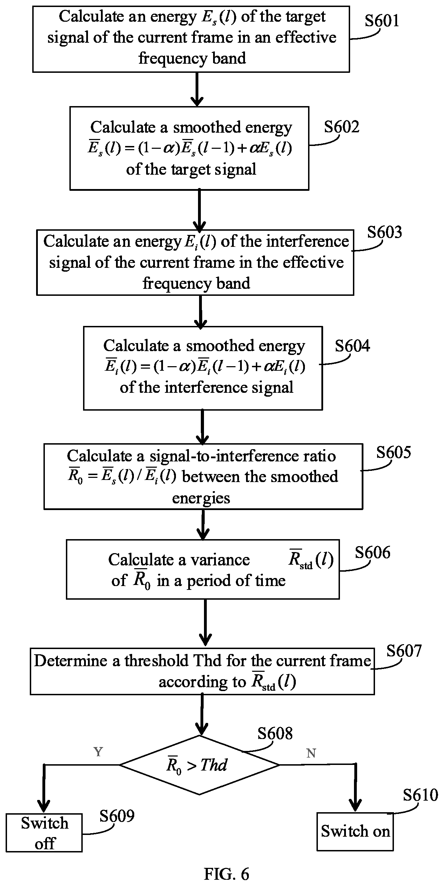

In an implementation (two) of the control policy based on the output of the ICA, as shown in FIG. 6, the following steps are included.

In a step of S601, an energy $E_s(l)$ of the target signal $Y^1(k,l)$ of the current frame in an effective frequency band is calculated.

In a step of S602, a smooth energy $\overline{E}_s(l)$ = (1-$\alpha)\overline{E}_s(l$-1)+$\alpha E_s(l)$ of the target signal is calculated, where a represents a smoothing factor (0<$\alpha$<1).

In a step of S603, an energy $E_i(l)$ of the interference signal $Y^2(k,l)$ of the current frame in the effective frequency band is calculated.

In a step of S604, a smooth energy $\overline{E}_i(1)$ = (1-$\alpha)\overline{E}_i(l$-1)+$\alpha E_i(l)$ of the interference signal is calculated.

In a step of S605, a signal-to-interference ratio $\overline{R}_0 = \overline{E}_s(l)/ \overline{E}_i(l)$ between the smooth energies is calculated.

In a step of S606, a variance $\overline{R}_{std}(l)$ of $\overline{R}_0$ in a period of time (e.g., 2s) is calculated.

In a step of S607, a threshold Thd for the current frame is determined by table look-up or threshold comparison according to $\overline{R}_{std}(l)$.

In a step of S608, if $\overline{R}_0$ > *Thd*, a decision of "switch off" is output; otherwise, a decision of "switch on" is output.

In a step of S609, if the decision is "switch off", an input signal of the adaptive filter is set as $Z(k,l)$ = $Y^2(k,l)$.

In a step of S610, if the decision is "switch on", the input signal of the adaptive filter is set as $Z(k,l)$ = $Y^1(k,l)$ + $Y^2(k,l)$.

Adaptive filtering is performed to obtain an estimated pure target signal:

$$\hat{S}(k,l) = Y^1(k,l) - W^*(k,l)Z(k,l),$$

where $W(k,l)$ represents an adaptive filtering coefficient, and $(\blacksquare)^*$ represents conjugation.

An inverse Fourier transform is performed on $\hat{S}(k,l)$ to obtain a final time-domain output of noise reduction processing.

The adaptive filtering coefficient is adaptively updated as:

$$W(k,l+1)=W(k,l)+\mu\frac{\hat{S}(k,l)}{E_z(k,l)}Z^*(k,l),$$

where $\mu$ represents an update step size, and $E_z(k,l)$ represents a smooth energy of $Z(k,l)$

$E_z(k,l) = (1-\lambda)E_z(k,l-1) + \lambda|Z(k,l)|^2$, where $\lambda$ represents a smoothing factor ($0<\lambda<1$).

To sum up, in the above embodiment, the accuracy of the adaptive filter in interference prediction can be improved, and an effect of suppressing interference residues in the target signal separated by the ICA can be achieved.

From the above detailed description of the embodiments, those having ordinary skills in the art can clearly understand that the methods in the above embodiments can be implemented by software and a necessary general-purpose hardware platform, and of course can also be implemented by hardware, but in many cases, the former is a better implementation. Based on such an understanding, the technical schemes of the present disclosure essentially or the part contributing to conventional technologies may be embodied in the form of a software product. The computer software product is stored in a storage medium (such as a ROM/RAM, a magnetic disk, an optical disc, etc.), and contains several instructions for causing a terminal (which may be a mobile phone, a computer, a server, a network device, or the like) to execute the methods described in the embodiments of the present disclosure.

An embodiment of the present disclosure provides a signal filtering apparatus. The apparatus is configured for implementing the above-mentioned embodiments and implementations. Details that have already been described will not be repeated here. As used herein, the term "module" may be a combination of software and/or hardware that implements a predetermined function. Although the apparatus described in the following embodiments is preferably implemented in the form of software, an implementation using hardware or using a combination of software and hardware is also possible and can be conceived of.

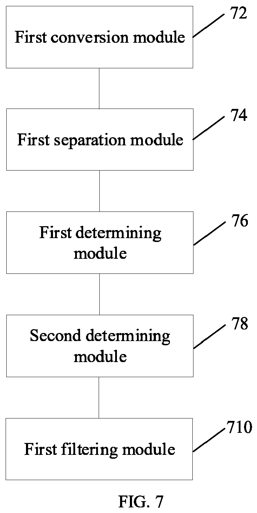

FIG. 7 is a structural block diagram of a signal filtering apparatus according to an embodiment of the present disclosure. As shown in FIG. 7, the apparatus includes:

a first conversion module 72, configured for performing a Fourier transform on time-domain data acquired by M microphones to convert the time-domain data into frequency-domain signals of M channels of a current frame, where M is a natural number greater than 1;

a first separation module 74, configured for separating the frequency-domain signals of the M channels to obtain a target signal and an interference signal of the current frame;

a first determining module 76, configured for determining a signal-to-interference ratio between a smooth energy of the target signal and a smooth energy of the interference signal;

a second determining module 78, configured for determining a threshold for the current frame based on the target signal and the interference signal; and

a first filtering module 710, configured for filtering the target signal based on the threshold for the current frame and the signal-to-interference ratio between the smooth energies to obtain a pure target signal.

In an embodiment, the first determining module includes:

a first calculation unit, configured for calculating an energy $E_s(l)$ of the target signal in an effective frequency band;
a second calculation unit, configured for calculating a smooth energy $\overline{E}_s(l)=(1-\alpha)\overline{E}_s(l-1)+\alpha E_s(l)$ of the target signal, where $\alpha$ represents a first smoothing coefficient, and $\alpha$ is greater than 0 and less than 1;
a third calculation unit, configured for calculating an energy $E_i(l)$ of the interference signal in the effective frequency band;
a fourth calculation unit, configured for calculating a smooth energy $\overline{E}_i(l)= (1-\alpha)\overline{E}_i(l-1) + \alpha E_i(l)$ of the interference signal; and
a fifth calculation unit, configured for calculating a signal-to-interference ratio $\overline{R}_0 = \overline{E}_s(l) / \overline{E}_i(l)$ between the smooth energies.

In an embodiment, the second determining module includes:

a sixth calculation unit, configured for calculating an energy $E_s(l)$ of the target signal in an effective frequency band;
a seventh calculation unit, configured for calculating an energy $E_i(l)$ of the interference signal in the effective frequency band;
an eighth calculation unit, configured for calculating a signal-to-interference ratio $R(l) = E_s(l)/E_i(l)$ of the current frame;
a ninth calculation unit, configured for calculating a smooth signal-to-interference ratio $\overline{R}(l)=(1-\beta)\overline{R}(l-1) + \beta R(l)$ and a mean value $\overline{R}_{mean}(l)$ of the smooth signal-to-interference ratio $R(l)$ in a preset time period, where $\beta$ represents a second smoothing coefficient, and $\beta$ is greater than 0 and less than 1; and a first determining unit, configured for determining the threshold for the current frame according to $\overline{R}_{\text{mean}}(l)$.

In an embodiment, the first filtering module includes:

a first setting unit, configured for setting an input signal of an adaptive filter as $Z(k,l) = Y^2(k,l)$ when the signal-to-interference ratio between the smooth energies is greater than the threshold for the current frame, where $(k,l)$ represents data of a $k^{\text{th}}$ frequency of an $l^{\text{th}}$ frame, and $Y^2(k,l)$ represents the interference signal; and

a second determining unit, configured for filtering the target signal based on the input signal of the adaptive filter to obtain the pure target signal $\hat{S}(k,l)=Y^1(k,l)-W^*(k,l)Z(k,l)$, where $Y^1(k,l)$ represents the target signal, $W(k,l)$ represents a coefficient of the adaptive filter, and $(\blacksquare)^*$ represents conjugation.

In an embodiment, the first filtering module includes:

a second setting unit, configured for setting an input signal of an adaptive filter as $Z(k,l) = Y^1(k,l)+Y^2(k,l)$ when the signal-to-interference ratio between the smooth energies is less than or equal to the threshold for the current frame, where $(k,l)$ represents data of a $k^{\text{th}}$ frequency of an $l^{\text{th}}$ frame, $Y^1(k,l)$ represents the target signal, and $Y^2(k,l)$ represents the interference signal; and
a third determining unit, configured for filtering the target signal based on the input signal of the adaptive filter to obtain the pure target signal $\hat{S}(k,l)=Y^1(k,l)-W^*(k,l)Z(k,l)$, where $Y^1(k,l)$ represents the target signal, $W(k,l)$ represents a coefficient of the adaptive filter, and $(\blacksquare)^*$ represents conjugation.

In an embodiment, the apparatus further includes: a third determining module, configured for performing an inverse Fourier transform on the pure target signal to obtain a time-domain target signal, after the target signal is filtered based on the threshold for the current frame and the signal-to-interference ratio between the smooth energies to obtain the pure target signal; and
an output module, configured for outputting the time-domain target signal.

In an embodiment, the apparatus further includes:
a feedback module, configured for feeding back the pure target signal into the adaptive filter to update a filtering coefficient of the adaptive filter, after the target signal is filtered based on the threshold for the current frame and the signal-to-interference ratio between the smooth energies to obtain the pure target signal.

It should be noted that the above modules may be implemented by software or hardware. The hardware implementation may be realized in the following manner, but the present disclosure is not limited thereto: the above modules are all located in a same processor; or, the above modules are located in different processors in the form of arbitrary combinations.

An embodiment of the present disclosure provides a computer-readable storage medium, storing a computer program which, when executed by a processor, causes the processor to implement the method in any one of the above method embodiments.

In an embodiment, the computer-readable storage medium may include, but not limited to, any medium that can store the computer program, such as a USB flash drive, a Read-Only Memory (ROM), a Random Access Memory (RAM), a removable hard disk, a magnetic disk, or an optical disk.

An embodiment of the present disclosure provides an electronic device, including a memory and a processor, where the memory is configured for storing a computer program which, when executed by the processor, causes the processor to implement the method in any one of the above method embodiments.

In an embodiment, the electronic device may further include a transmission device and an input/output device. Both the transmission device and the input/output device are connected to the processor.

For examples in this embodiment, reference may be made to the examples described in the above embodiments and example implementations, and the details will not be repeated in this embodiment.

According to the present disclosure, by performing a Fourier transform on time-domain data acquired by M microphones to convert the time-domain data into frequency-domain signals of M channels of a current frame, separating the frequency-domain signals of the M channels to obtain a target signal and an interference signal of the current frame, determining a signal-to-interference ratio between a smooth energy of the target signal and a smooth energy of the interference signal, determining a threshold for the current frame based on the target signal and the interference signal, and filtering the target signal based on the threshold for the current frame and the signal-to-interference ratio between the smooth energies to obtain a pure target signal, an input source of an adaptive filter is controlled based on the signal-to-interference ratio between the smooth energy of the target signal and the smooth energy of the interference signal, thereby improving the accuracy of the adaptive filter in interference prediction. Therefore, the problem of incomplete separation of interference residues from the target signal in existing technologies can be resolved, thereby effectively suppressing the interference signal.

It will be apparent to those having ordinary skills in the art that, the modules or steps of the present disclosure may be realized by a general-purpose computing device; may be centrally deployed on a single computing device or distributed on a network composed of a plurality of computing devices; and may be implemented with program code executable by a computing device, and therefore may be stored in a storage device for execution by a computing device. In some cases, the steps shown or described may be performed in a order different from the orders described herein. Alternatively, the modules or steps may be respectively fabricated into integrated circuit modules, or a plurality of modules or steps may be fabricated into a single integrated circuit module. Therefore, the present disclosure is not limited to any particular combination of hardware and software.

The above description is only some embodiments of the present disclosure, and is not intended to limit the present disclosure. To those having ordinary skills in the art, various modifications and variations may be made to the present disclosure. Any modifications, equivalent replacements, and improvements made within the principle of the present disclosure shall fall within the scope of the present disclosure.

**Claims**

1. A signal filtering method, comprising:

   performing a Fourier transform on time-domain data acquired by M microphones to convert the time-domain data into frequency-domain signals of M channels of a current frame, wherein M is a natural number greater than 1;
   separating the frequency-domain signals of the M channels to obtain a target signal and an interference signal of the current frame;
   determining a signal-to-interference ratio between a smooth energy of the target signal and a smooth energy of the interference signal;
   determining a threshold for the current frame based on the target signal and the interference signal; and
   filtering the target signal based on the threshold for the current frame and the signal-to-interference ratio between the smooth energies to obtain a pure target signal.

2. The method of claim 1, wherein determining a signal-to-interference ratio between a smooth energy of the target signal and a smooth energy of the interference signal comprises:

   calculating an energy $E_s(l)$ of the target signal in an effective frequency band, wherein $l$ represents a number of frames;
   calculating the smooth energy $\overline{E}_s(l)= (1-\alpha)\overline{E}_s(l-1) + \alpha E_s(l)$ of the target signal, wherein $\alpha$ represents a first smoothing coefficient, and $\alpha$ is greater than 0 and less than 1;
   calculating an energy $E_i(l)$ of the interference signal in the effective frequency band;
   calculating the smooth energy $\overline{E}_i(1) = (1-\alpha)\overline{E}_i(l-1) + \alpha E_i(1)$ of the interference signal; and
   calculating the signal-to-interference ratio $\overline{R}_0 = \overline{E}_s(l)/\overline{E}_i(l)$ between the smooth energies.

3. The method of claim 1, wherein determining a threshold for the current frame based on the target signal and the interference signal comprises:

   calculating an energy $E_s(l)$ of the target signal in an effective frequency band, wherein $l$ represents a number of frames;
   calculating an energy $E_i(l)$ of the interference signal in the effective frequency band;
   calculating a signal-to-interference ratio $R(l) = E_s(l)/ E_i(l)$ of the current frame;
   calculating a smooth signal-to-interference ratio $\overline{R}(l)=(1- \beta)\overline{R}(l-1)+ \beta R(l)$ and a mean value $\overline{R}_{mean}(l)$ of the smooth signal-to-interference ratio $\overline{R}(l)$ in a preset time period, wherein $\beta$ represents a second smoothing coefficient, and $\beta$ is greater than 0 and less than 1; and
   determining the threshold for the current frame according to $\overline{R}_{mean}(l)$.

4. The method of claim 1, wherein filtering the target signal based on the threshold for the current frame and the signal-to-interference ratio between the smooth energies to obtain a pure target signal comprises:

   setting an input signal of an adaptive filter as $Z(k,l) = Y^2(k,l)$, in response to the signal-to-interference ratio between the smooth energies being greater than the threshold for the current frame, wherein $(k,l)$ represents data of a $k^{th}$ frequency of an $l^{th}$ frame, and $Y^2(k,l)$ represents the interference signal; and
   filtering the target signal based on the input signal of the adaptive filter to obtain the pure target signal $\hat{S}(k,l)=Y^1(k,l)-W^*(k,l)Z(k,l)$, wherein $Y^1(k,l)$ represents the target signal, $W(k,l)$ represents a coefficient of the adaptive filter, and $(\blacksquare)^*$ represents conjugation.

5. The method of claim 1, wherein filtering the target signal based on the threshold for the current frame and the signal-to-interference ratio between the smooth energies to obtain a pure target signal comprises:

setting an input signal of an adaptive filter as $Z(k,l) = Y^1(k,l) + Y^2(k,l)$, in response to the signal-to-interference ratio between the smooth energies being less than or equal to the threshold for the current frame, wherein $(k,l)$ represents data of a $k^{th}$ frequency of an $l^{th}$ frame, $Y^1(k,l)$ represents the target signal, and $Y^2(k,l)$ represents the interference signal; and

filtering the target signal based on the input signal of the adaptive filter to obtain the pure target signal $\hat{S}(k,l) = Y^1(k,l) - W^*(k,l)Z(k,l)$, wherein $Y^1(k,l)$ represents the target signal, $W(k,l)$ represents a coefficient of the adaptive filter, and $(\blacksquare)^*$ represents conjugation.

6. The method of claim 1, wherein after filtering the target signal based on the threshold for the current frame and the signal-to-interference ratio between the smooth energies to obtain a pure target signal, the method further comprises:

performing an inverse Fourier transform on the pure target signal to obtain a time-domain target signal; and
outputting the time-domain target signal.

7. The method of claim 1, wherein after filtering the target signal based on the threshold for the current frame and the signal-to-interference ratio between the smooth energies to obtain a pure target signal, the method further comprises:
feeding back the pure target signal into an adaptive filter to update a filtering coefficient of the adaptive filter.

8. A signal filtering apparatus, comprising:

a first conversion module, configured for performing a Fourier transform on time-domain data acquired by M microphones to convert the time-domain data into frequency-domain signals of M channels of a current frame, wherein M is a natural number greater than 1;
a first separation module, configured for separating the frequency-domain signals of the M channels to obtain a target signal and an interference signal of the current frame;
a first determining module, configured for determining a signal-to-interference ratio between a smooth energy of the target signal and a smooth energy of the interference signal;
a second determining module, configured for determining a threshold for the current frame based on the target signal and the interference signal; and
a first filtering module, configured for filtering the target signal based on the threshold for the current frame and the signal-to-interference ratio between the smooth energies to obtain a pure target signal.

9. A computer-readable storage medium, storing a computer program which, when executed by a processor, causes the processor to carry out the method of any one of claims 1 to 7.

10. An electronic device, comprising a memory, a processor, and a computer program stored in the memory and executable by the processor, wherein the computer program, when executed by the processor, causes the processor to carry out the method of any one of claims 1 to 7.

Input/output device 108

Transmission
device
106

Processor 102

Memory
104

FIG. 1

Perform a Fourier transform on time-domain data acquired by M
microphones to convert the time-domain data into frequency-
domain signals of M channels of a current frame ⟋ S202

Separate the frequency-domain signals of the M channels of the
current frame to obtain a target signal and an interference signal
of the current frame ⟋ S204

Determine a signal-to-interference ratio between a smoothed
energy of the target signal and a smoothed energy of the
interference signal ⟋ S206

Determine a threshold for the current frame based on the target
signal and the interference signal ⟋ S208

Filter the target signal based on the threshold for the current
frame and the signal-to-interference ratio between the smoothed
energies to obtain a pure target signal ⟋ S210

FIG. 2

FIG. 3

S401

Off ⟨ Control policy ⟩

On

S402

**Directly input the interference signal to the adaptive filter**

S403

**Superimpose the interference signal with the target signal, and input same to the adaptive filter**

S404

**Adaptive filtering**

S405

**Subtract an output of the adaptive filter from the target signal to obtain a pure target signal for output**

S406

**Update a coefficient of the adaptive filter by using the current pure target signal for next filtering**

FIG. 4

Calculate an energy $E_s(l)$ of the target signal of the current frame — S501

Calculate a smoothed energy $\overline{E}_s(l) = (1-\alpha)\overline{E}_s(l-1) + \alpha E_s(l)$ of the target signal — S502

Calculate an energy $E_i(l)$ of the interference signal of the current frame in an effective frequency band — S503

Calculate a smoothed energy $\overline{E}_i(l) = (1-\alpha)\overline{E}_i(l-1) + \alpha E_i(l)$ of the interference signal — S504

Calculate a signal-to-interference ratio $\overline{R}_0 = \overline{E}_s(l) / \overline{E}_i(l)$ between the smoothed energies — S505

Calculate a signal-to-interference ratio $R(l) = E_s(l) / E_i(l)$ of the current frame — S506

Calculate a smoothed signal-to-interference ratio $\overline{R}(l) = (1-\beta)\overline{R}(l-1) + \beta R(l)$ and a mean value $R_{\mathrm{mean}}(l)$ of the smoothed signal-to-interference ratio $\overline{R}(l)$ in a period of time — S507

Determine a threshold Thd for the current frame according to $\overline{R}_{\mathrm{mean}}(l)$ — S508

S509 — $\overline{R}_0 > Thd$

Y → Switch off — S510

N → Switch on — S511

FIG. 5

14

Calculate an energy $E_s(l)$ of the target signal of the current frame in an effective frequency band — S601

Calculate a smoothed energy $\overline{E}_s(l) = (1-\alpha)\overline{E}_s(l-1) + \alpha E_s(l)$ of the target signal — S602

Calculate an energy $E_i(l)$ of the interference signal of the current frame in the effective frequency band — S603

Calculate a smoothed energy $\overline{E}_i(l) = (1-\alpha)\overline{E}_i(l-1) + \alpha E_i(l)$ of the interference signal — S604

Calculate a signal-to-interference ratio $\overline{R}_0 = \overline{E}_s(l)/\overline{E}_i(l)$ between the smoothed energies — S605

Calculate a variance $\overline{R}_{std}(l)$ of $\overline{R}_0$ in a period of time — S606

Determine a threshold Thd for the current frame according to $\overline{R}_{std}(l)$ — S607

$\overline{R}_0 > Thd$ — S608

Y → Switch off — S609

N → Switch on — S610

FIG. 6

FIG. 7

## INTERNATIONAL SEARCH REPORT

| | International application No. |
|---|---|
| | **PCT/CN2022/082810** |

**A. CLASSIFICATION OF SUBJECT MATTER**

G10L 21/0208(2013.01)i

According to International Patent Classification (IPC) or to both national classification and IPC

**B. FIELDS SEARCHED**

Minimum documentation searched (classification system followed by classification symbols)

G10L;G06K

Documentation searched other than minimum documentation to the extent that such documents are included in the fields searched

Electronic data base consulted during the international search (name of data base and, where practicable, search terms used)

ENTXTC, CNTXT, ENTXT, CNKI, DWPI, IEEE: 滤波, 帧, 能量, 比, 干扰, 阈值, 目标, 信号, 信干比, filter, frame, energy, ratio, interference, threshold, target, signal

**C. DOCUMENTS CONSIDERED TO BE RELEVANT**

| Category* | Citation of document, with indication, where appropriate, of the relevant passages | Relevant to claim No. |
|---|---|---|
| X | CN 103871420 A (HUAWEI TECHNOLOGIES CO., LTD.) 18 June 2014 (2014-06-18) claims 1-18, and description, paragraphs 2-275 | 1-10 |
| A | CN 111063366 A (UNISOC (CHONGQING) TECHNOLOGY CO., LTD.) 24 April 2020 (2020-04-24) entire document | 1-10 |
| A | CN 111489760 A (TENCENT TECHNOLOGY SHENZHEN CO., LTD.) 04 August 2020 (2020-08-04) entire document | 1-10 |
| A | CN 111179957 A (TENCENT TECHNOLOGY SHENZHEN CO., LTD.) 19 May 2020 (2020-05-19) entire document | 1-10 |
| A | US 2012093333 A1 (NATIONAL CHIAO TUNG UNIVERSITY) 19 April 2012 (2012-04-19) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 June 2022** | **09 June 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/082810**

| Patent document cited in search report | | | Publication date (day/month/year) | Patent family member(s) | | | Publication date (day/month/year) |
|---|---|---|---|---|---|---|---|
| CN | 103871420 | A | 18 June 2014 | CN | 103871420 | B | 21 December 2016 |
| CN | 111063366 | A | 24 April 2020 | WO | 2021128670 | A1 | 01 July 2021 |
| CN | 111489760 | A | 04 August 2020 | WO | 2021196905 | A1 | 07 October 2021 |
| CN | 111179957 | A | 19 May 2020 | | None | | |
| US | 2012093333 | A1 | 19 April 2012 | TW | 201218738 | A | 01 May 2012 |
| | | | | US | 8712075 | B2 | 29 April 2014 |
| | | | | TW | I437555 | B | 11 May 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110580896